# EUROPÄISCHE PATENTSCHRIFT

(11) **EP 1 413 500 B1**
(45) Veröffentlichungstag und Bekanntmachung des Hinweises auf die Patenterteilung: **24.01.2007**
(21) Anmeldenummer: 03102589.3
(22) Anmeldetag: 19.08.2003
(51) Int. Cl.: B62D 15/02, B60Q 9/00, B60Q 1/52

(54) **Spurhaltesystem für ein Kraftfahrzeug und Betriebsverfahren**
Lane keeping system for a vehicle and method of operation
Systéme de suivi de voie pour véhicule et methode de fonctionnement

(30) Priorität: 23.10.2002 DE 10249354
(43) Veröffentlichungstag der Anmeldung: 28.04.2004
(73) Patentinhaber: ROBERT BOSCH GMBH, 70442 Stuttgart (DE)
(72) Erfinder: Knoll, Peter, 76275, Ettlingen (DE); Beutnagel-Buchner, Uwe, 70186, Stuttgart (DE); Uhler, Werner, 76646, Bruchsal (DE); Egelhaaf, Jan, 71229, Leonberg (DE); Maass, Alexander, 71229, Leonberg (DE)

(56) Entgegenhaltungen:
- EP-A- 0 640 903
- DE-A- 10 027 922
- DE-A- 19 602 766
- DE-A- 19 818 259
- US-A- 5 699 057

## Beschreibung

### Technisches Gebiet

Die Erfindung betrifft ein Spurhaltesystem für ein Kraftfahrzeug mit einer am Kraftfahrzeug angebrachten Umfeldsensoreinrichtung zum Erfassen der Fahrspur des Fahrzeugs, und einer Warneinrichtung zum Warnen des Fahrzeuglenkers im Fall, dass das Fahrzeug die Fahrspur unter Gefahr zu verlassen droht. Die Erfindung betrifft auch ein Verfahren zum Betrieb eines solchen Spurhaltesystems.

### Stand der Technik

Ein Spurhaltesystem der genannten Art wird beispielsweise bei Fahrten auf der Landstraße eingesetzt. Die Fahrspur, die vor dem Fahrzeug liegt, wird dabei durch eine Umfeldsensorik erfasst. Droht das Fahrzeug, die Fahrspur nach rechts in Richtung des Straßengrabens zu verlassen, so wird eine akustische oder eine haptische Warnung an den Fahrzeuglenker ausgeben. Ein solches System wird insbesondere als so genanntes Einschlafwarnsystem verwendet, das bei fehlenden Lenkreaktionen eines ermüdeten oder abgelenkten Fahrers eine Warnung abgibt.

Eine andere Einsatzmöglichkeit eines Spurhaltesystems der genannten Art ergibt sich bei der Fahrt auf einer mehrspurigen Autobahn, wenn der Fahrzeuglenker etwa die rechte Spur verlassen und auf die mittlere oder linke Spur wechseln will, um ein vorausfahrendes langsameres Fahrzeug zu überholen. Wird dann beim Beginn des Lenkvorgangs durch die Umfeldsensorik ein sich von hinten schnell näherndes Fahrzeug erkannt, so wird der Fahrzeuglenker durch eine akustische oder haptische Warnung veranlasst, den Spurwechselvorgang abzubrechen.

Das Spurhaltesystem weist dazu typischerweise eine Sensorelementanordnung auf, die aus einem zweidimensionalen Sensorelementarray oder auch nur einer oder einigen wenigen Sensorelementzeilen besteht. Die Sensorelementanordnung ist in der Regel im Frontbereich des jeweiligen Fahrzeugs nach vorne weisend angebracht und tastet einen gewissen Fahrbahnbereich vor dem Fahrzeug ab. Die gewonnenen Bildinformationen werden mit bekannten Techniken analog oder digital weiterverarbeitet, um Informationen über den Verlauf der Fahrbahnmarkierungen oder des Fahrbahnrandes zu extrahieren. Eine Warneinrichtung gibt im Fall, dass das Fahrzeug die momentane Fahrspur unter Gefahr zu verlassen droht, eine akustische oder haptische Warnung aus.

Eine akustische Warnung kann beispielsweise in Form eines so genannten Nagelbandrattergeräusches seitenspezifisch auf derjenigen Fahrzeugseite abgegeben werden, auf der dass Fahrzeug die Fahrspur unter Gefahr zu verlassen droht. Durch ein solches Nagelbandrattergeräusch wird akustisch das Überfahren einer mit Nägeln oder einem Profil versehenen Fahrbahnmarkierung nachgebildet. Als Reaktion auf dieses Geräusch kann der Fahrer intuitiv meist sehr rasch eine geeignete Lenkkorrektur vornehmen. Nachteilig an einer solchen akustischen Warnung ist allerdings, dass die anderen Fahrzeuginsassen dadurch oft stark gestört und verunsichert werden.

Eine Störung der anderen Fahrzeuginsassen wird bei einer haptischen Warnung, etwa einer Vibration des Lenkrads zwar vermieden. Allerdings ist eine solche Vibrationswarnung nicht richtungsspezifisch, so dass der Fahrer intuitiv keine gerichtete Lenkkorrektur vornehmen kann. Vielmehr muss der Fahrer, durch die Warnung aufgeschreckt, zunächst die momentane Situation optisch erfassen und dann eine angemessene Reaktion einleiten. Dadurch gehen gerade in kritischen Verkehrssituationen oft wertvolle Sekundenbruchteile verloren.

Aus der EP 640 903 A1 ist ein gattungsgemäßes Spurhaltesystem für ein Fahrzeug bekannt. Ein an einem Fahrzeug angeordnete Videokamera erfasst Straßenmarkierungen. Die Position des Fahrzeugs wird ebenfalls erfasst und mit den Straßenmarkierungen in Relation gesetzt. Mit der Lenkung des Fahrzeugs ist ein Motor verbunden, der ein zusätzliches oder ein entgegengesetztes Drehmoment auf die Lenkung einwirken lassen kann. Ferner ist ein haptisches Warnsignal bekannt, bei dem eine Vibration des Lenkrades durch eine Überlagerung des auf das Lenkrad wirkenden Drehmoments mit einem symmetrischen Dreiecksignal erzeugt wird.

### Darstellung der Erfindung

Der Erfindung liegt daher die Aufgabe zugrunde, ein Spurhaltesystem der eingangs genannten Art zu schaffen, das bei geringstmöglicher Störung der Mitfahrer dem Fahrzeuglenker dennoch im Gefahrfall eine intuitive Lenkreaktion ermöglicht.

Diese Aufgabe wird durch die im Anspruch 1 angegebenen Merkmale gelöst. Charakteristischerweise ist die Warneinrichtung so ausgelegt und eingerichtet, dass sie dem Fahrzeuglenker eine haptische Richtungsindikation gibt, also eine Information über die Richtung enthält, in der die gefahrvolle Fahrspurüberschreitung droht. Dadurch kann einerseits eine Störung der anderen Fahrzeuginsassen durch akustische Signale vermieden werden, zugleich wird aber die Richtungsinformation in dem Warnsignal erhalten. Der Fahrzeuglenker kann somit, jedenfalls nach einer kurzen

Eingewöhnungsphase, intuitiv dem gefahrvollen Spurwechsel gegenlenken.

Vorteilhafte Ausgestaltungen und Weiterbildungen der Erfindung sind in den Unteransprüchen gekennzeichnet.

Bevorzugt ist nach der Weiterbildung der Erfindung nach Patentanspruch 2 vorgesehen, dass die Warneinrichtung eine mit der Lenkung zusammenwirkende Vibrationseinrichtung aufweist, zum Erzeugen einer haptischen Rückmeldung für den Fahrzeuglenker durch Vibration des Lenkrads.

Dabei ist in vorteilhafter Ausgestaltung der Erfindung nach Patentanspruch 3 vorgesehen, dass die mit der Lenkung zusammenwirkende Vibrationseinrichtung zum Erzeugen einer Wanderwelle auf dem Lenkrad eingerichtet ist, wobei der Verlauf der Wanderwelle die Richtung angibt, in der die gefahrvolle Fahrspurüberschreitung droht. Die Wanderwelle kann beispielsweise von links nach rechts oder von rechts nach links verlaufen, um dem Fahrer die Richtung der erforderlichen Lenkkorrektur anzuzeigen. Der Fahrer spürt über seine aufliegenden Hände die Richtung der Wanderwellen und kann somit direkte Gegenmaßnahmen ergreifen.

Nach der Maßnahme des Patentanspruchs 4 ist neben der Vibrationsei n-richtung eine Sekundärwarnvorrichtung zur Ausgabe eines optischen und/oder akustischen Warnsignals vorgesehen. Dann kann im Fall, dass die haptische Warnung ignoriert wird oder erfolglos bleibt, ein weiteres anders geartetes Warnsignal abgegeben werden. Störungen der Mitfahrer werden damit auf ein für die Sicherheit der Fahrzeuginsassen unvermeidbares Maß reduziert.

In der Weiterbildung der Erfindung nach Patentanspruch 5 ist dazu mit Vorteil eine Überwachungseinrichtung vorgesehen, die feststellt, ob der Fahrzeuglenker eine Hand am Lenkrad aufliegen hat, und die, falls keine Hand am Lenkrad aufliegt, die Sekundärwarnvorrichtung auslöst.

Gemäß der ebenfalls bevorzugten Weiterbildung der Erfindung nach Patentanspruch 6 ist vorgesehen, dass die Warneinrichtung eine mit dem Fahrersitz zusammenwirkende Vibrationseinrichtung aufweist, zum Erzeugen einer haptischen Rückmeldung für den Fahrzeuglenker durch Vibration des Fahrersitzes.

Dabei kann die mit dem Fahrersitz zusammenwirkende Vibrationseinrichtung nach der Maßnahme des Patentanspruchs 7 mit Vorteil durch eine Vibrationsmatte zum Erzeugen von Vibrationen in verschiedenen Richtungen gebildet sein, wobei die Richtung der Vibrationen die Richtung angibt, in der die gefahrvolle Fahrspurüberschreitung droht.

Nach einer weiteren bevorzugten Weiterbildung der Erfindung gemäß Patentanspruch 8 ist vorgesehen, dass die Warneinrichtung eine mit dem Fahrersitz zusammenwirkende Kippvorrichtung aufweist, zum Verkippen des Fahrersitzes in eine Richtung, die die Richtung angibt, in der die gefahrvolle Fahrspurüberschreitung droht. Beispielsweise kann der Fahrersitz durch die Kippvorrichtung als Ganzes leicht nach links oder rechts weggekippt werden, um den Fahrzeuglenker zu einer entsprechenden Lenkkorrektur zu veranlassen.

Die Umfeldsensoreinrichtung des Kraftfahrzeugs kann nach der Ausgestaltung des Patentanspruchs 9 mit Vorteil eine mit der Warneinrichtung zusammenwirkende Sensoreinrichtung zum Erfassen von sich rückwärtig nähernden Fahrzeugen aufweisen, zur Ausgabe einer Warnung, falls sich bei einem Wechsel auf eine neue Fahrspur sich auf der neuen Fahrspur von hinten ein Fahrzeug schnell nähert.

Insbesondere enthält die Umfeldsensoreinrichtung des Kraftfahrzeugs zweckmäßig einen Radarsensor, einen Ultraschallsensor oder eine Bildaufnahmekamera.

Bei einem Verfahren zum Betrieb eines derartigen Spurhaltesystems für ein Kraftfahrzeug wird erfindungsgemäß die Fahrspur des Fahrzeugs erfasst, wird beurteilt, ob das Fahrzeug die Fahrspur unter Gefahr zu verlassen droht und wird ein Warnsignal für den Fahrzeuglenker erzeugt, wenn das Fahrzeug die Fahrspur unter Gefahr zu verlassen droht, wobei charakteristischerweise das Warnsignal dem Fahrzeuglenker eine haptische Rückmeldung gibt, die eine Information über die Richtung enthält, in der die gefahrvolle Fahrspurüberschreitung droht.

### Kurze Beschreibung der Zeichnungen

Ausführungsbeispiele der Erfindung werden nachstehend anhand der Zeichnungen näher erläutert. Es zeigen
- Fig. 1: eine schematische Darstellung eines Kraftfahrzeugs mit einem Spurhaltesystem nach einem Ausführungsbeispiel der Erfindung auf einer zweispurigen Autobahn;
- Fig. 2: eine schematische Darstellung eines Spurhaltesystems nach einem Ausführungsbeispiel der Erfindung, bei dem Wanderwellen im Lenkrad die Richtung einer gefahrvollen Fahrspurüberschreitung angeben;
- Fig. 3: eine schematische Darstellung eines Spurhaltesystems nach einem anderen Ausführungsbeispiel der Erfindung, bei dem Vibrationen des Fahrersitzes die Richtung einer gefahrvollen Fahrspurüberschreitung angeben; und
- Fig. 4: eine schematische Darstellung eines Spurhaltesystems nach einem weiteren Ausführungsbeispiel der Erfindung, bei dem eine Verkippung des Fahrersitzes die Richtung einer gefahrvollen Fahrspurüberschreitung angibt.

### Bester Weg zur Ausführung der Erfindung

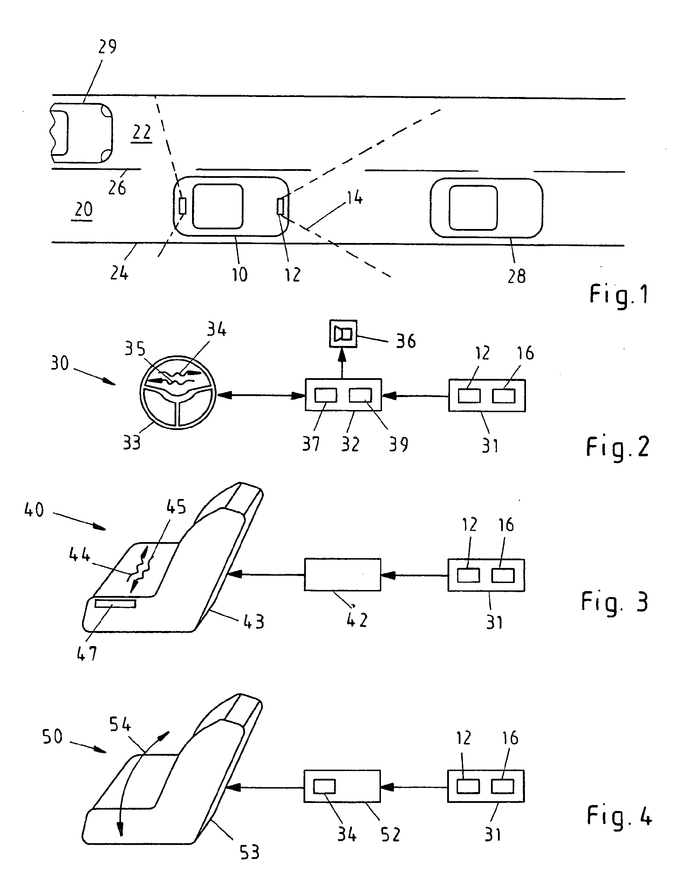

Figur 1 illustriert ein Spurhaltesystem nach einem Ausführungsbeispiel der Erfindung mit einer schematischen Darstellung eines Kraftfahrzeugs 10 auf einer zweispurigen Autobahn 20, 22. Das Spurhaltesystem umfasst eine Umfeldsensorik 31 (Fig. 2), die im Ausführungsbeispiel einen im vorderen Fahrzeugabschnitt angebrachten und nach vorne weisenden vorderen Sensor 12 und einen im hinteren Fahrzeugabschnitt angebrachten und nach hinten weisenden rückwärtigen Sensor 16 enthält.

Das Gesichtsfeld 14 des vorderen Sensors 12 erfasst die rechte Fahrbahnbegrenzung 24 der rechten Fahrspur 20 und die die Fahrspuren 20 und 22 trennende Fahrbahnmarkierung 26. Eine Recheneinheit des Spurhaltesystems, beispielsweise ein Mikroprozessor, bestimmt aus den erfassten Sensordaten die Position des Fahrzeugs 10 relativ zur Fahrspur 20.

Das Gesichtsfeld 18 des hinteren Sensors 16 deckte den rückwärtigen Bereich des Fahrzeugs 10 ab, um von hinten herankommende Fahrzeuge 29 zu erfassen.

Droht das Fahrzeug 10, etwa aufgrund einer Ablenkung oder der Übermüdung des Fahrers, die Fahrbahnbegrenzung 24 zu überschreiten und die Fahrspur 20 nach rechts zu verlassen, so wird im Lenkrad eine Wanderwelle erzeugt, die der Fahrer über seine aufliegende Hände auf die Gefahr hinweist und zu Gegenmaßnahmen veranlasst.

Wie die schematische Darstellung des Spurhaltesystems 30 der Fig. 2 illustriert, gibt die Umfeldsensorik 31 dazu ein Signal an die Warneinheit 32 aus. Die Warneinheit 32 enthält eine Vibrationseinheit 37, die eine nach links laufende Wanderwelle 35 in dem Lenkrad 33 erzeugt. Der Fahrer wird dadurch veranlasst, durch eine Lenkbewegung nach links der drohenden Fahrspurüberschreitung entgegenzuwirken. Die Warneinheit 32 kann, falls erforderlich, auch eine nach rechts laufende Wanderwelle 34 im Lenkrad 33 erzeugen, etwa wenn das Fahrzeug 10 auf der linken Spur 22 der Autobahn fährt und dort die Fahrspur 22 nach links zu verlassen droht.

Die Warneinheit 32 enthält auch eine Überwachungseinheit 39, die feststellt, ob eine Hand am Lenkrad 33 aufliegt. Liegt keine Hand am Lenkrad 33 auf, kann der Fahrer also den haptischen Warnhinweis nicht erhalten, so wird über den Lautsprecher 36 in bekannter Weise ein akustisches Warnsignal ausgegeben.

Ein akustisches Warnsignal kann auch ausgegeben werden, wenn der Fahrer auf den haptischen Warnhinweis hin nicht reagiert und weiter eine Fahrspurüberschreitung droht oder erfolgt. Dadurch, dass im Ausführungsbeispiel die akustische Warnung nur dann abgegeben wird, wenn der haptische Warnhinweis nicht wahrgenommen werden kann oder nicht aufgenommen wurde, werden Störungen der Mitfahrer auf ein für die Sicherheit der Fahrzeuginsassen unvermeidbares Maß reduziert.

Durch den rückwärtigen Sensor 16 kann das Spurhaltesystem 30 auch als Hilfsvorrichtung für Spurwechsel eingesetzt werden, wenn etwa der Fahrer des Fahrzeugs 10 die rechte Fahrspur 20 verlassen und auf die linke Fahrspur 22 wechseln will, um ein vorausfahrendes langsameres Fahrzeug 28 zu überholen. Wird beim Beginn des Lenkvorgangs durch den rückwärtigen Sensor 16 ein auf der Fahrspur 22 schnell von hinten herankommendes Fahrzeug 29 erfasst, so gibt die Umfeldsensorik 31 ein entsprechendes Signal an die Warneinheit 32 aus und die Vibrationseinheit 37 erzeugt eine nach rechts laufende Wanderwelle 34 in dem Lenkrad 33. Dadurch wird der Fahrer veranlasst, wieder nach rechts zu lenken und den Spurwechselvorgang abzubrechen. Auch hier wird ein akustisches Warnsignal ausgegeben, wenn keine Hand am Lenkrad 33 aufliegen sollte.

Figur 3 zeigt eine schematische Darstellung eines Spurhaltesystems 40 nach einem anderen Ausführungsbeispiel der Erfindung. Bei diesem Ausführungsbeispiel gibt die gibt die Umfeldsensorik 31 bei Drohen einer gefahrvollen Spurüberschreitung ein Signal an eine Warneinheit 42 aus. Die Warneinheit 42 veranlasst eine im Fahrersitz 43 verbaute Vibrationsmatte 47, eine Vibrationsbewegung 44 oder 45 in der Richtung der erforderlichen Lenkkorrektur zu erzeugen. Dadurch kann der Fahrer als Reaktion auf die Vibrationsbewegung intuitiv eine Lenkkorrektur in die richtige Richtung durchführen.

Neben den genannten nach rechts bzw. nach links laufenden Vibrationsbewegungen 44 bzw. 45 können bei dieser Ausführungsform durch die Vibrationsmatte 47 auch Vibrationsbewegungen von vorne nach hinten oder von hinten nach vorne erzeugt werden, um andere haptische Rückmeldungssignale, etwa für einen erforderlichen Brems- oder Beschleunigungsvorgang für den Fahrer bereitzustellen.

Auch bei dem in Figur 4 gezeigten Ausführungsbeispiel eines Spurhaltesystems 50 gibt die Umfeldsensorik 31 bei Drohen einer gefahrvollen Spurüberschreitung ein entsprechendes Signal an eine Warneinheit 52 aus. Die Warneinheit 52 enthält eine Kippvorrichtung 57, die den Fahrersitz 53 als Ganzes leicht nach links oder rechts kippen kann (Bezugszeichen 54), um dem Fahrer die Richtung der erforderlichen Lenkkorrektur anzuzeigen.

Während die Erfindung insbesondere mit Bezug auf bevorzugte Ausführungsbeispiele gezeigt und beschrieben worden ist, versteht sich für den Fachmann, dass Änderungen in Gestalt und Einzelheiten gemacht werden können, ohne von dem Gedanken und Umfang der Erfindung abzuweichen. Beispielsweise kann die Umfeldsensorik 31 in einer einfacheren und preiswerteren Ausgestaltung nur einen Sensor 12 enthalten. Die Funktion des Spurhaltesystems als Hilfsvorrichtung für Spurwechsel steht dann nicht zur Verfügung. Dementsprechend soll die Offenbarung der vorliegenden Erfindung nicht einschränkend sein. Statt dessen soll die Offenbarung der vorliegenden Erfindung den Umfang der Erfindung veranschaulichen, der in den nachfolgenden Ansprüchen dargelegt ist.

## Patentansprüche

1. Spurhaltesystem für ein Kraftfahrzeug mit
- einer am Kraftfahrzeug (10) angebrachten Umfeldsensoreinrichtung (31) zum Erfassen der Fahrspur (20) des Fahrzeugs, und
- einer Warneinrichtung (32; 42; 52) zum Warnen des Fahrzeuglenkers im Fall, dass das Fahrzeug (10) die Fahrspur (20) unter Gefahr zu verlassen droht,
**dadurch gekennzeichnet,dass**
die Warneinrichtung (32; 42; 52) ausgelegt und eingerichtet ist, dem Fahrzeuglenker eine haptische Rückmeldung zu geben, die eine Information über die Richtung enthält, in der die gefahrvolle Fahrspurüberschreitung droht.

2. Spurhaltesystem nach Anspruch 1, **dadurch gekennzeichnet, dass**
die Warneinrichtung (32) eine mit der Lenkung zusammenwirkende Vibrationseinrichtung (37) aufweist, zum Erzeugen einer haptischen Rückmeldung für den Fahrzeuglenker durch Vibration des Lenkrads (33).

3. Spurhaltesystem nach Anspruch 2, **dadurch gekennzeichnet, dass**
die mit der Lenkung zusammenwirkende Vibrationseinrichtung (37) zum Erzeugen einer Wanderwelle (34, 35) auf dem Lenkrad (33) eingerichtet ist, wobei der Verlauf der Wanderwelle (34, 35) die Richtung angibt, in der die gefahrvolle Fahrspurüberschreitung droht.

4. Spurhaltesystem nach Anspruch 2 oder 3, **dadurch gekennzeichnet, dass**
neben der Vibrationseinrichtung (37) eine Sekundärwarnvorrichtung (36) zur Ausgabe eines optischen und/oder akustischen Warnsignals vorgesehen ist.

5. Spurhaltesystem nach Anspruch 4, **dadurch gekennzeichnet,dass**
eine Überwachungseinrichtung (39) vorgesehen ist, die feststellt, ob der Fahrzeuglenker eine Hand am Lenkrad (33) aufliegen hat, und die, im Fall, dass keine Hand am Lenkrad (33) aufliegt, die Sekundärwarnvorrichtung (36) auslöst.

6. Spurhaltesystem nach Anspruch 1, **dadurch gekennzeichnet,dass**
die Warneinrichtung (42) eine mit dem Fahrersitz (43) zusammenwirkende Vibrationseinrichtung (47) aufweist, zum Erzeugen einer haptischen Rückmeldung für den Fahrzeuglenker durch Vibration des Fahrersitzes (43).

7. Spurhaltesystem nach Anspruch 6, **dadurch gekennzeichnet,dass**
die mit dem Fahrersitz (43) zusammenwirkende Vibrationseinrichtung durch eine Vibrationsmatte (47) zum Erzeugen von Vibrationen in verschiedenen Richtungen (44, 45) gebildet ist, wobei die Richtung der Vi b-rationen die Richtung angibt, in der die gefahrvolle Fahrspurüberschreitung droht.

8. Spurhaltesystem nach Anspruch 1, **dadurch gekennzeichnet, dass**
die Warneinrichtung (52) eine mit dem Fahrersitz (53) zusammenwirkende Kippvorrichtung (57) aufweist, zum Verkippen des Fahrersitzes (53) in eine Richtung, die die Richtung angibt, in der die gefahrvolle Fahrspurüberschreitung droht.

9. Spurhaltesystem nach einem der vorhergehenden Ansprüche,
**dadurch gekennzeichnet,dass**
die Umfeldsensoreinrichtung (31) des Kraftfahrzeugs (10) eine mit der Warneinrichtung zusammenwirkende Sensoreinrichtung (16) zum Erfassen von sich rückwärtig nähernden Fahrzeugen aufweist, zur Ausgabe einer Warnung, falls sich bei einem Wechsel auf eine neue Fahrspur (22) auf der neuen Fahrspur (22) von hinten ein Fahrzeug (29) schnell nähert.

10. Verfahren zum Betrieb eines Spurhaltesystems für ein Kraftfahrzeug nach einem der vorhergehenden Ansprüche, bei dem die Fahrspur des Fahrzeugs erfasst wird, beurteilt wird, ob das Fahrzeug die Fahrspur unter Gefahr zu verlassen droht und ein Warnsignal für den Fahrzeuglenker erzeugt wird, wenn das Fahrzeug die Fahrspur unter Gefahr zu verlassen droht,
**dadurch gekennzeichnet,dass**
- das Warnsignal dem Fahrzeuglenker eine haptische Rückmeldung gibt, die eine Information über die Richtung enthält, in der die gefahrvolle Fahrspurüberschreitung droht.

## Claims

1. Lane keeping system for a motor vehicle having
- a surroundings sensor device (31) which is mounted on the motor vehicle (10) and has the purpose of sensing the lane (20) of the vehicle, and
- a warning device (32; 42; 52) for warning the vehicle driver if the vehicle (10) threatens to leave the lane (20) in a hazardous situation,
**characterized in that** the warning device (32; 42; 52) is configured and designed to provide the vehicle driver with haptic feedback which contains information about the direction in which the hazardous departure from the lane threatens to occur.

2. Lane keeping system according to Claim 1, **characterized in that** the warning device (32) has a vibration device (37) which interacts with the steering system and has the purpose of generating haptic feedback for the vehicle driver by vibrating the steering wheel (33).

3. Lane keeping system according to Claim 2, **characterized in that** the vibration device (37) which interacts with the steering system is designed to generate a travelling wave (34, 35) on the steering wheel (33), the profile of the travelling wave (34, 35) specifying the direction in which the hazardous departure from the lane threatens to occur.

4. Lane keeping system according to Claim 2 or 3, **characterized in that**, in addition to the vibration device (37), a secondary warning device (36) is provided for issuing a visual and/or audible warning signal.

5. Lane keeping system according to Claim 4, **characterized in that** a monitoring device (39) is provided which detects whether the vehicle driver has rested a hand on the steering wheel (33) and which triggers the secondary warning device (36) if there is no hand resting on the steering wheel (33).

6. Lane keeping system according to Claim 1, **characterized in that** the warning device (42) has a vibration device (47) which interacts with the driver's seat (43) and has the purpose of generating haptic feedback for the vehicle driver by vibrating the driver's seat (43).

7. Lane keeping system according to Claim 6, **characterized in that** the vibration device which interacts with the driver's seat (43) is formed by a vibration mat (47) for generating vibrations in different directions (44, 45), the direction of the vibrations indicating the direction in which the hazardous departure from the lane threatens to occur.

8. Lane keeping system according to Claim 1, **characterized in that** the warning device (52) has a tilting device (57) which interacts with the driver's seat (53) and has the purpose of tilting the driver's seat (53) in a direction which indicates the direction in which the hazardous departure from the lane threatens to occur.

9. Lane keeping system according to one of the preceding claims, **characterized in that** the surroundings sensor device (31) of the motor vehicle (10) has a sensor device (16) which interacts with the warning device and has the purpose of sensing vehicles approaching from behind, and of issuing a warning if, when the motor vehicle (10) is changing over to a new lane (22), a vehicle (29) approaches quickly on the new lane (22).

10. Method for operating a lane keeping system for a motor vehicle according to one of the preceding claims, in which the lane of the vehicle is sensed, it is assessed whether the vehicle threatens to depart from the lane in a dangerous situation, and a warning signal is generated for the vehicle driver if the vehicle threatens to depart from the lane in a hazardous situation, **characterized in that**
- the warning signal provides the vehicle driver with haptic feedback which contains information about the direction in which the hazardous departure from the lane threatens to occur.

## Revendications

1. Système de guidage de voie pour un véhicule automobile, comprenant
- un dispositif de capteurs d'environnement (31) disposé au niveau du véhicule automobile (10) pour saisir la voie de circulation (20) du véhicule, et
- un dispositif d'avertissement (32 ; 42 ; 52) pour avertir le conducteur dans le cas où le véhicule (10) menace dangereusement de quitter la voie de circulation (20),
**caractérisé en ce que**
le dispositif d'avertissement (32 ; 42 ; 52) est conçu pour émettre à l'attention du conducteur du véhicule une confirmation haptique contenant une information sur la direction dans laquelle le danger de débordement de la voie de circulation dangereux risque de se produire.

2. Système de guidage de voie selon la revendication 1,
**caractérisé en ce que**
le dispositif d'avertissement (32) présente un dispositif de vibration (37) coopérant avec la direction, afin de générer une confirmation haptique par la vibration du volant (33).

3. Système de guidage de voie selon la revendication 2,
**caractérisé en ce que**
le dispositif de vibration (37) coopérant avec la direction est conçu pour générer une onde progressive (34, 35) sur le volant (33), le tracé de l'onde progressive (34, 35) indiquant la direction dans laquelle le danger de débordement de la voie de circulation risque de se produire.

4. Système de guidage de voie selon la revendication 2 ou 3,
**caractérisé en ce qu'**
outre le dispositif de vibration (37), un dispositif d'avertissement secondaire (36) émet un signal d'avertissement optique et/ou acoustique.

5. Système de guidage de voie selon la revendication 4,
**caractérisé en ce qu'**
un dispositif de surveillance (39) détermine si le conducteur du véhicule a une main posée sur le volant (33) et qui, dans le cas contraire, déclenche le dispositif d'avertissement secondaire (36).

6. Système de guidage de voie selon la revendication 1,
**caractérisé en ce que**
le dispositif d'avertissement (42) présente un dispositif de vibration (47) coopérant avec le siège du conducteur (43), afin de générer une confirmation haptique par la vibration du siège du conducteur (43).

7. Système de guidage de voie selon la revendication 6,
**caractérisé en ce que**
le dispositif de vibration coopérant avec le siège du conducteur (43) est formé par un tapis vibrant (47) qui génère des vibrations dans des directions différentes (44, 45), la direction des vibrations indiquant la direction dans laquelle le danger de débordement de la voie de circulation risque de se produire.

8. Système de guidage de voie selon la revendication 1,
**caractérisé en ce que**
le dispositif d'avertissement (52) présente un dispositif de basculement (57) coopérant avec le siège du conducteur (53), faisant basculer le siège du conducteur (53) dans la même direction que celle où le danger de débordement de la voie de circulation risque de se produire.

9. Système de guidage de voie selon l'une des revendications précédentes,
**caractérisé en ce que**
le dispositif de capteurs d'environnement (31) du véhicule automobile (10) présente un dispositif de détection (16), coopérant avec le dispositif d'avertissement, afin de saisir des véhicules se rapprochant par l'arrière, afin d'émettre un avertissement si, en cas de passage sur une nouvelle voie de circulation (22), un véhicule (29) venant de l'arrière se rapproche rapidement sur la nouvelle voie de circulation (22).

10. Procédé de fonctionnement d'un système de guidage de voie pour un véhicule automobile selon l'une des revendications précédentes, dans lequel
la voie de circulation du véhicule est saisie, on évalue risque de quitter dangereusement la voie de circulation, est évalué et
un signal est émis à l'attention du conducteur du véhicule si le véhicule menace de quitter dangereusement la voie de circulation,
**caractérisé en ce que**
le signal d'avertissement émet à l'attention du conducteur du véhicule une confirmation haptique, qui contient une information sur la direction dans laquelle le danger de débordement de la voie de circulation risque de se produire.
